# EUROPEAN PATENT SPECIFICATION

(11) **EP 0 785 218 B1**
(45) Date of publication and mention of the grant of the patent: **20.08.2003**
(21) Application number: 97830010.1
(22) Date of filing: 16.01.1997
(51) Int. Cl.: C08B 37/00, D21C 1/00, D21C 5/00, A23J 1/00

(54) **Method for making industrial products from agricultural raw materials either containing or not starch**
Verfahren zur Herstellung industrieller Produkte aus rohen landwirtschaftlichen Materialien enthaltend Stärke oder nicht
Méthode de fabrication de produits industriels à partir de matériaux agricoles bruts contenant ou non de l'amidon

(30) Priority: 16.01.1996 IT MI960062
(43) Date of publication of application: 23.07.1997
(73) Proprietor: Green Group S.r.L., 45019 Taglio di Po (Rovigo) (IT)
(72) Inventor: Menegatto, Mario, 45019 Taglio Di Po (Rovigo) (IT)
(74) Representative: Cicogna, Franco

(56) References cited:
- EP-A- 0 698 681
- GB-A- 1 574 946
- DATABASE WPI Week 9407 Derwent Publications Ltd., London, GB; AN 94-053207 XP002061208 & JP 06 007 098 A (SHIOMI I) , 18 January 1994
- DATABASE WPI Week 9419 Derwent Publications Ltd., London, GB; AN 94-151788 XP002061209 & BR 9 303 343 A (GERBER W D) , 19 April 1994

## Description

### BACKGROUND OF THE INVENTION

The present invention relates to a synthesis method for making industrial products from agricultural raw materials such as purple medic, corn, sorghum and other vegetable products or byproducts either containing or not starch.

As is known, the main agricultural cultivations, as at present performed comprise corn, wheat, purple medic, barley, oats and other species having a minor interest or exclusively an alimentary interest such as wheat, sugar beet and sugarcane.

As is further known, corn may be harvested at two different ripening stages:

### - Waxy ripening.

In this case the corn plants are cut on the field and collected in large pits or heaps. Under these conditions, a lactic fermentation occurs which allows to reduce the pH of the medium to acid values adapted to inhibit the growth of putrefactive bacteria. In this condition, the product is administered to animals.

### - Physiologic ripening.

In this case, the corn plants are subjected to a threshing process, i.e. to a separation of the corn grains from the cobs and the supporting parts, which operation is performed as the corn plant has ended its vegetative cycle and the water contents is respectively of 10-15% in the overhead parts and 20-25% in the corn grains. The overhead part is conventionally left on the field or used as bed for animals.

The grains are dried in hot air and stored in large silos into which is periodically blown air in order to prevent an overheating of the stored material and a formation of condensate susceptible to generate mould.

The grains may also be collected with a water contents of 30-35%, and then ground and stored in silos or pits. In this case too, a lactic fermentation occurs bringing the product to an acid pH thereby allowing it to be preserved.

The full corn plant can also be harvested even at a lacteous ripening stage and subjected to a cutting operation on the field, and then stored in a pressed condition in pits where an acid type of fermentation occurs.

The purple medic, on the contrary, is cut and left to wither on the field for several days. Then a further cutting up operation is performed and the cut-up purple medic is brought to the farm where it is dried so as to provide a product having a moisture residue of about 10%.

The dried product can be then subjected to two further processing steps: a grinding step followed by a diceing step, or a packaging step without any grinding step so as to be packaged into bales having a weight of 700-800 kg.

From an analysis of the present harvesting, preserving and transforming processes performed on the cultivations being considered, it is possible to make some observations of an agronomic nature, as well as of a technical-economic-sanitary-ecological nature.

### Observations of agronomic nature

With respect to the corn cultivations, as the corn plants are harvested in a physiologic ripening condition, the harvesting field will be freed, nearly at a late period with respect to the autumnal rains. In this case, the ploughing and seeding operations are performed in precarious conditions detrimental for the novel crop. This same operation can be extended, in a reduced degree, to the harvesting of the corn plants in a waxy condition.

On the contrary, with respect to the purple medic, because of a conventional withering step, a further passing of the operating machines through the field is necessary, as well as reduction of the insolation period of the plants, thereby delaying the regrow process.

### Observations of technical-economical-sanitary--ecological nature

### Corn

The energy and the plastic function substances produced by the sun energy and the substances introduced into the ground in the form of manure both of organic and synthetic nature, are recovered only partially. It is possible to suppose a recovery of the order of 50% of the starting value.

This is due to the fact that the supporting overhead parts which, in a green condition, contain sugars, proteins, vitamins, will loss, under insolation, and the consequent drying, nearly the overall biologic value thereof. Thus, to the ground will restituted substances which can be hardly absorbed and used by the bacterial and fungin-flora present in the ground.

In order to clarify the above disclosure, it should be pointed out that if the remaining part would be filled in into the ground in a vegetative condition, then the restitution would correspond to a green dunging or green manure.

With respect to the grains the following observations can be made: the high temperature drying, as necessary for removing the inner moisture, will involve a development of browning phenomena (the so-called Maillard's effect). This phenomena will involve a condensation of the sugars with aminoacids and proteins thereby the resulting compound would not be available for absorption.

Moreover, heating effects will also deactuate natural enzymes which are usually present in the seeds, and which would favour the digestion processes. More specifically, the greatest damage would involve an enzyme phytase. This enzyme, in particular, would control the reduction of the phytates which, in addition to not being suitable to use by monogastric juices in this form, would reduce the availability and use of other elements forming a diet.

During the storing period, the caryopsis breathing phenomena would continue so as to reduce to CO₂ and H₂O sugars and fats with a consequent product loss.

In this connection a great amount of moisture would be generated, with a development of mycotoxins which are a main cause of mortality and reduction of the product yields.

Under these conditions, moreover, the agricultural products would be subjected to the attack of rodents and insects. Accordingly it would be necessary to use insecticides and pesticides which would be frequently left in the product.

### Purple medic

As is known, the value of purple medic does not correspond exclusively to the protein and fibre contents, but mainly to the contents of betacarotene, xanthophyll, and E and K vitamins.

In a cut plant, left on the ground, would continue oxidation phenomena due to breathing, thereby causing losses of aminoacids and sugars.

The sun rays, moreover, would cause a drastic reduction of betacarotene and xanthophyll contents.

A subsequent drying process, performed at a high temperature, would further increase the loss of the above mentioned noble substances.

These economic nature observations are related to both cultivations and, in particular, to the consume of fuel materials to provide a proper drying.

In fact a great portion of the thermal energy or power is discharged into the atmosphere in the form of hot air having a temperature exceeding 100°C.

With respect to the ecologic problem, it is related not only to the discharging of heat into the atmosphere, but also to discharging of sylica, not burnt components, as well as SO₂ and other dangerous compounds. The recovery or disposal of these polluting substances represents a very great problem due to the high cost associated with the related systems and the operation thereof, also considering the small size of the existing farms.

The document "Database WPI, Week 9407, Derwent Publications Ltd., London, GB; AN 94-053207" discloses a nutritive liquid preparation useful for feeding cattles- by crushing and compressing corncomb, separating and extracting crushed product to fibre and liquid part, and then preparing nutritive liquid from liquid part. The method comprises (a) crushing and comprising the corncomb, from which corn grains are previously removed, (b) separating and extracting the crushed product to fiber and liquid part, (c) preparing nutritive liquid from liquid part and (d) if necessary, crystallizing the nutritive liquid for obtaining nutritive product. The method also comprises fermenting the liquid part obtained in (b) naturally for obtaining vinegar and/or alcohol. Corncomb has been used as the feed for cattles, fuel, etc. The method shows that the liquid part obtained in (b) contains protein and sugars plentifully.

### SUMMARY OF THE INVENTION

Accordingly, the aim of the present invention is to provide a method for making, from agricultural raw materials such as purple medic, corn, sorghum and other vegetable materials, as well as agricultural products and byproducts either containing or not starch, the following industrial use products:
- cellulose and other polysaccharides for preparing a lot of the materials which can be made starting from cellulose such as wood replacement materials as well as components for the footwear industry;
- vegetable sera containing soluble proteins, not protainaceous nitrogen, mineral salts, sugars and adapted to be used for the following applications:
   a) preserving of corn products and oil seeds in a wet condition. This being possible due to a spontaneous acidifying induced in said sera by the present bacteria or by an inoculum of selected acidifying bacteria.

This type of preserving would provide the following advantages:
1) A transformation of the phytates, contained in the seeds and not used in this form by animals, into perfectly absorbable phosphorus and inositol, due to the phytases present in the seeds and not deactuated by the temperatures as conventionally used in the drying step.
   In a like degree would be deactuated other substances having a toxic and antinutritional function such as substances inhibiting trypsin, lectin, saponin, polyfenolic compounds, alkaloid glycosides.
   In this connection it should be pointed out that the above mentioned seed toxic substances are produced by the plants for providing protection against insects, birds or other animals.
2) Preserving of the polymerizing degree of sugars with a partial reduction of starch to a simple sugar which can be quickly digested.
3) A reduction of proteins to polypeptides and aminoacids.
   The above mentioned results would allow animals to obtain a great saving of the energy which is usually consumed at the anabolic level for reducing the compound substances to simple substances.
   The complex substance reduction processes, as well as the anti-nutritional factor deactuating processes are induced by the acidity of the medium and by enzymes which are present in the active seeds and sera.
4) Acidifying of the corn products and oil seeds by a biologic method.
   Said acidifying would provide:
   a) a perfect preserving of the corn products and the products mixed therewith which would inhibit the growth of pathogenic bacteria.
   b) an acidifying of the gastro-intestinal tract of the monogastric juices with the following advantages:
      - an increased digestion of proteins and starches;
      - an elimination of pathogenic microflora, thereby favouring a growth of lactic bacteria reducing the diarrheic phenomena in pigs and chicken.
5) A full elimination of the problem associated with conventional storing systems: a loss of product due to a breathing phenomenon, the formation of mould, microtoxins, and the high energy consume due to necessary periodic treatments.
6) A reduction of the drying requirements since:
   a) the product can be used in wet or liquid mixtures for pigs and cattle.
   b) the particular structure assumed by the grain materials due to a wet recovery, as necessary for the subsequent drying process, would allow a more economic and quick evaporation of the water held in the seeds; in this connection it would be also possible to perform a preliminarily dripping on and pressing of the wet grains before the extrusion thereof.
      - Process liquids deriving from the processing of the fibrous residue having an alkaline pH and containing proteins, sugars, mineral salts and adapted to be used for:
         1) Recovery proteins of zootechnic interest;
         2) Producing grain products and oil seeds, of an alkalinized type, having a pH adjusting function in ruminant animals, for example in the cases of a ruminal acidosis.
         3) Providing sugary liquids for use in a zootechnical feeding, in agriculture or for making fermentation products.
      - Chemical components such as: proctopectines, glucans, emicellulose, glucomannans, galactose, mannose and other polysaccharides having a glueing function for the cellulose fibers. Said substances, if extracted together with cellulose, would provide an im proved cellulose, since they can replace other chemical and vegetable products, such as starch, glueing or binding materials and so on. The above chemical components can also be separately extracted.
      - Starch. This product is obtained by pressing the corn cobs at a precocious ripening stage and can be used for conventional zootechnical and industrial applications.
      - Proteinaceous-vitaminic concentrates containing in a comparatively high degree principles having pigmenting functions, as well as proteolytic, cellulose, sugary enzymes and mineral salts.
      - Several amounts of sugars contained in sera such as: rannose, fucose, ribose, arabinose, xylose, mannose, galactose, glucose, inositol.
      - Sugar-proteinaceous fibrous residues of high assorbance properties, obtained by pressing the corn cobs and which can be used for animal feeding.
      - Fibers of different lengths (5-20 cm) obtained from the corn leaves and which can be used, in addition to making cellulose, for preparing textile fibres and as a replacement of asbestos fibers and other like products.

The above aim is achieved by a method according to claim 1.

### BRIEF DESCRIPTION OF THE DRAWINGS

Further characteristics and advantages of the method according to the present invention will become more apparent hereinafter from the disclosure of two preferred, though not exclusive, embodiments of said method, which are illustrated, by way of an indicative but not limitative example, in the accompanying drawings, where:
Figure 1 illustrates a flow diagram related to a method for processing purple medic and other vegetable products in a green status, not containing starch and free of toxic substances; and
Figure 2 illustrates a flow diagram related to a processing of full plants of green corn, harvested before a full ripening thereof.

### DESCRIPTION OF THE PREFERRED EMBODIMENTS

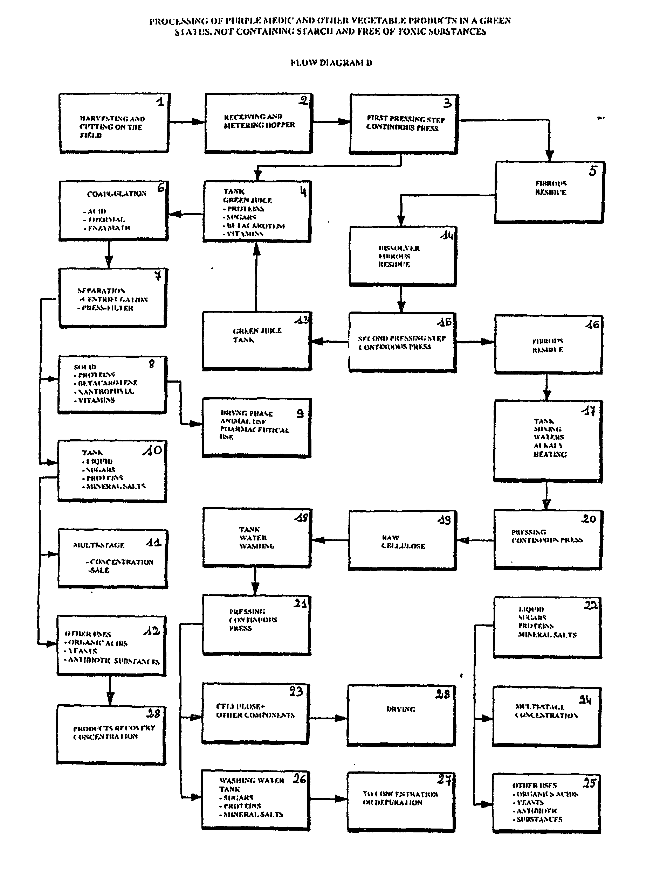

### Processing of purple medic and other vegetable cultivations in a green status, non containing starch and free of toxic substances, as shown in the flow diagram D of figure 1

The purple medic is harvested, cut on the field 1 and supplied to a receiving and metering hopper 2, therefrom it is supplied to a continuous press 3 for performing a first pressing step. From the latter machine two fractions are obtained:
- Phase a: a green juice 4 containing proteins, betacarotene, xanthophyll, vitamins, mineral salts, sugars and having a water contents of about 90%, corresponding, by amount, to about 30% of the starting product.
- Phase b: a fibrous residue 5, still containing proteins, betacarotene, vitamins, mineral salts, sugars and having a water contents of about 50% corresponding, by amount, to about 70% of the starting product.

The fibrous residue 5, phase b, will be supplied to a dissolver 14. The product exiting the dissolver 14 being continuously supplied to a press 15. From the latter two phases are obtained:
- Phase c: a green juice 13, containing proteins, betacarotene, xanthophyll, vitamins, mineral salts, sugars and having a water contents of about 90%, corresponding, by amount, to about 20% of the starting product.
- Phase d: a fibrous residue 16 containing, but in a smaller degree than the phase b, proteins, betacarotene, xanthophyll, mineral salts, sugars and having a water contents less than about 50%, corresponding, by amount, to about 80% of the starting product.

This phase d will be sent to the green juice tank or vessel 4.

From the tank 4, the green juice will be sent, in a continuous manner, to a coagulating apparatus 6. In particular, the coagulation can be performed by the following methods: by an acid method, by adding mineral and organic acids, by a thermal method, by heating the product to temperatures from 50°C to 90°C, or by a fermentative method by inoculating acidifying bacteria.

All of the mentioned systems will provide an isoelectric pH suitable for coagulating and precipitating proteins contained in the liquid material.

In a continuous manner, the product from the coagulating apparatus 6 will be supplied to a separating device 7 which can be constituted by a centrifugal separator or by a press-filer either of a continuous or of a discontinuous type.

From the separator 7 two phases are obtained:
- Phase f: a solid material 8, containing proteins, betacarotene, xanthophyll, vitamins, sugars, mineral salts and having a water content of about 50%, corresponding, by amount, to about 50% of the starting product.
- Phase g: a liquid material 10 containing sugars, proteins, mineral salts, vitamins and having a water contents of about 90%, corresponding, by amount, to about 50% of the starting product.

The phase f is dried in an apparatus 9 and can be used as dried for forming feedstuff materials for animals, or can be subjected to other processing steps for extracting therefrom pharmaceutical products.

The phase g, constituted by a liquid, can be subjected to the following processing steps: a concentration in the multi-stage concentrating device 5, to provide a product having a water contents of 40% and which can be used as it is or for fermentatively producing in the fermentator 12 organic acids, yeasts, antibiotic substances, aminoacids.

The liquid residues 28 of the above mentioned processes can be concentrated up to a contents of residue water of 40% or more and used in the feedstuff or in the manure industry.

The fibrous residue phase 16 is supplied to a heated tank 17 where it is mixed with water in an amount of about 50% by weight as well as with an alkalinizing product to provide a pH value from 8 to 14. The temperature of the mixture will be from 50°C to 120°C.

This heating and alkalinizing process can be performed in a continuous manner. The alkaly contents, temperature, heating times can vary depending on several changing parameters such as: the alkaly amount, temperature, heating times.

This treatment is performed for separating the fibrous residue comprising nearly all the components different from cellulose: proteins, sugars, mineral salts, and so on. The holding time of the mixture in the heating apparatus will depend on the temperature and alkalinity degree of the mixture. From the tank 17, the alkalized product will be continuously supplied to the continuous press 20. From the latter two phases will be obtained:
- Phase h: the liquid 22, containing sugars, proteins, mineral salts and having a water contents of about 90%, corresponding to an amount of about 50% of the starting product.
- Phase i: raw cellulose 19, also containing products different from cellulose: proteins, sugars, mineral salts, and so on, in an amount corresponding to about 50% of the starting product.

The phase h 22 can be: concentrated in a multiple stage apparatus 24 and supplied in this form to using applications, or subjected to a fermentation 25 for providing organic acids, antibiotic products, yeasts, aminoacids.

The phase i, that is the raw cellulose 19, will be added with water at a rate of about 50% in the stirred tank 18. The water-cellulose mixture will be separated and sent to a continuous press 21, therefrom two phases will be obtained:
- Phase l: wet cellulose 23, with a water contents of 50%, and also containing other substances. This cellulose can be supplied as it is or it can be made pumpable to be sent to the user places or it can also be dried in the apparatus 28.
- Phase m: washing water 26, containing: sugars, proteins, mineral salts and having a substance residue corresponding to about 2% of the starting product in the tank.

The washing water of the tank 26 will be either concentrated by a multiple stage concentrator or sent to a further depuration step.

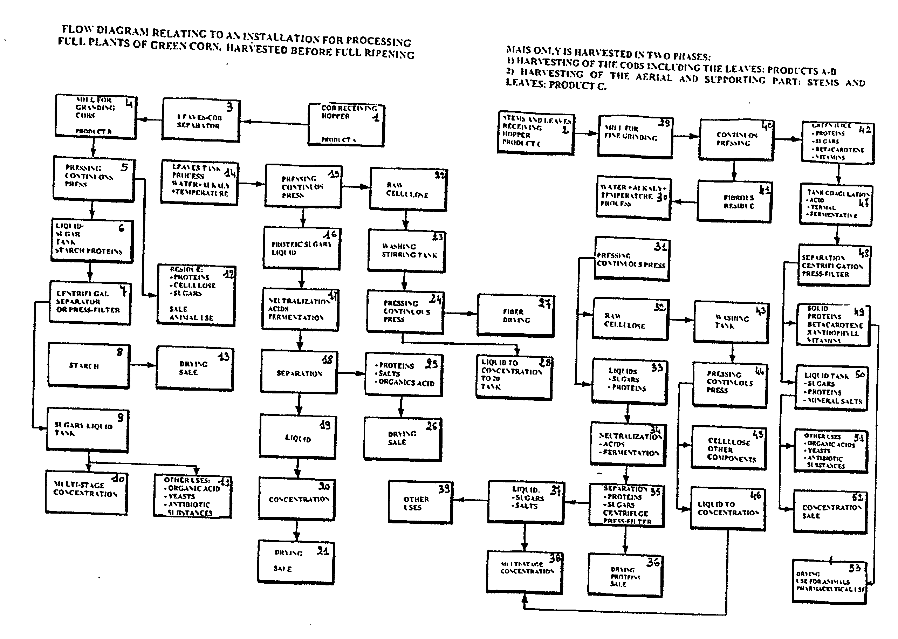

### Treatment of whole green corn plants, harvested before a full ripening (diagram of figure 2)

The product is harvested in two discrete steps.
- Harvesting of the cob including the leaves (products A-B).
- Harvesting and cutting on the field of the remaining portion of the plants, leaves and stems (product C).

The product A is introduced into the metering hopper 1.

The apparatus 3 will remove the leaves, corresponding to 10% of the starting product, which are sent to the tank 14, mixed with 50% water and with an alkalinizing product. The pH of the mixture must be from 8 to 14. The temperature of the mixture will be from 50°C to 120°C. This heating and alkalinizing process can be performed in a continuous manner, and it is carried out for separating cellulose from other components such as sugars, proteins, mineral salts, vitamins and other substances different from cellulose. The holding time of the mixture during which it is held in the heating apparatus will depend on temperature and alkalinity degree of said mixture.

Then, the aforesaid mixture will be continuous supplied from a continuous press 15 operating for separating the liquid containing the dissolved substances from the solid portion mainly constituted by cellulose.

From the press 15 two phases are obtained: raw cellulose 22 in an amount corresponding to 30% of the starting product, and a sugary protainaceous liquid 16 in an amount corresponding to 70% of the starting product.

The alkalinized sugary-protainaceous liquid can be neutralized and brought to a pH from 4 to 7 in the tank 17, equipped to that end, by two different methods:
a) by adding mineral and organic acids so as to achieve the protein precipitating isoelectric point;
b) by inoculating in the medium being processed specific bacteria adapted to transform the sugars and nitrogenous substances into organic acids, such as lactic, citric acids and so on, so as to achieve the protein precipitating isoelectric point.

This acidified mixture can be subjected to a separation 18 to provide the following components thereof:
- Phase a: a solid fraction 25, containing proteins, mineral salts, organic acids, to be subjected to a drying step 26 in order to provide a SS contents of 20-30% and corresponding, by amount, to 50% of the inlet product.
- Phase b: fermentation liquids 19, containing aminoacids or soluble proteins, mineral salts, bacteria, acidifying substances, and so on, having a SS contents of 3-5% and in an amount corresponding to 50% of the inlet product.

The liquid 19, phase b, will be concentrated so as to achieve a syrup having a SS contents of about 50-60%, by means of a multiple-stage concentrator 20 and then it can be sold has it is or used as it is or dried in 21 to a residue of 5-10% H₂O.

The raw cellulose 22 will be added with about 50% water in the stirred tank 23. The water-cellulose mixture will be separated by a continuous press 24 which will provide the following two phases:
- Phase c: wet cellulose 27, containing 50% of water and other substances, which will be dried.
- Phase d: washing water 28, containing sugars, proteins, minerals salts, and so on, and generally corresponding to 5% SS, in the tank, which will be concentrated in the concentrator 20.

The product B will be discharged into the hopper 4, including a grinding system for grinding wet products and it will be ground to a particle size suitable for an optimum subsequent separation of the several components thereof.

This separation will be carried out in the continuous press 5.

From the latter will be obtained the following two phases:
- Phase f: a liquid 6 containing sugars, starch, proteins, mineral salts, vitamins, pigments and having a SS contents of about 30%, corresponding to an amount of 50% of the inlet product.
- Phase g: a fibrous residue 12 still containing sugars, starches, proteins, vitamins, mineral salts, pigments and having a SS contents of about 40-50%, corresponding to an amount of 50% of the inlet product.

The liquid phase 6 will be supplied either to a horizontal centrifugal separator 7, or to a D-Canter, or to another filter-press device, either of a continuous or of a discontinuous type.

From this separation the following two products will be obtained:
- Phase h: starch 8 having a water contents of about 50% and corresponding to 50% of the inlet product, which will be dried at 13 so as to provide an end moisture of 5-10%.
- Phase i: a sugary liquid 9, sent to the tank, corresponding to 50% of the inlet product, without starch, but still containing: proteins, vitamins, pigments and having a water contents of about 90%.

The phase i, i.e. the sugary liquid, can be:
1) concentrated to a water contents of about 50% by a multiple stage apparatus 10 for providing a comparatively high power saving (known technology). The thus concentrated product can be sold for industrial or alimentary used.
2) Used as it is at 11, following suitable corrections, because of fermentative processes, in the production of organic acids, yeasts, aminoacids, antibiotic products, and so on.

The product C: stems and leaves will be introduced into the receiving and metering hopper 2. From the latter, the product will be supplied to the mill 29 thereby providing a product having a size suitable for providing an optimum separation of the two phases. This separation will be performed in the continuous press 40, therefrom will be obtained the following products:
- Phase l: a liquid 42, in the tank, containing: proteins, betacarotene, xanthophyll, vitamins, proteins and having a water contents of about 90%, corresponding to 60% of the starting product.
- Phase m: a fibrous residue 41 containing cellulose and a reduced amount of proteins, betacarotene, vitamins, sugars and having a water contents of about 50% and corresponding to 40% of the starting product.

The phase 1 will be subjected to a coagulation process 47.

Said coagulating process can be carried out: by means of organic or mineral acids, by heating two temperatures from 50°C to 90°C, or by coagulating enzymes, or by an acidifying bacteria fermentation.

All the mentioned systems will operate so as to provide an isoelectric pH suitable for coagulating and precipitating the proteins contained in the liquid material.

The phase m, that is the fibrous residue 41, will be mixed, in the tank 30, with water in an amount of 50% and with an alkalinizing product. The pH of the mixture must vary from 8 to 14. The temperature of the mixture will be from 50°C to 120°C. This heating and alkalinizing process can be carried out in a continuous manner and it is carried out for separating cellulose from the other components such as: sugars, proteins, mineral salts, vitamins and any other substances different from cellulose. The alkali contents, temperatures, cooking liquids can vary depending on the changing of those same parameters.

From the tank 30 the product will be supplied to the continuous press 31 therefrom the following two phases will be obtained:
- Phase n: raw cellulose 32 still containing traces of proteins and sugars with a contents of 50% water and corresponding to 40% of the starting product.
- Phase o: liquid 33, in a tank, containing sugars, soluble proteins, mineral salts, and 90% water.

The phase n 32 will be mixed in the tank 43 with water, in different amounts, and then it will be supplied to the continuous press 44.

From said press the following two phases will be obtained: cellulose and other substances 45 with a water contents of 50% corresponding to 40% of the starting product, a liquid 46 containing soluble proteins, sugars, mineral salts which can be concentrated at 38 to 90% water and corresponding to 60% of the starting product.

The liquid coagulated in the tank 47 will be separated by means of a horizontal centrifuge or a B-Canter or by a filter-press either of a continuous or of a discontinuous type 48.

From the separation step 48 the following two phases will be obtained:
- Phase p: a solid product 49 containing proteins, betacarotene, xanthophyll, vitamins, sugars and having a residue water contents of about 50% and corresponding to about 30% of the starting product. It can be further purified for a pharmaceutical use or it can be dried at 53 to provide a water contents corresponding to about 10%, for a zootechnical use.
- Phase q: a liquid 50, containing soluble proteins, sugars, vitamins, mineral salts and having a water contents of about 90%, in the tank.

The phase q can be:
1) concentrated at 52 to provide a moisture contents of 50% and then used as it is.
2) used as it is at 51 for making:
   organic acids, aminoacids, antibiotic products, yeasts.

From the above disclosure and from an observation of the several figures of the accompanying drawings, it should be apparent that the invention fully achieves the intended aim and objects.

In particular, the fact is to be pointed out that a method has been provided with, by adopting novel technologies, allows to provide several advantages, particularly in those Countries where exists a developed agriculture but affected by problems of an excess production.

The obtained advantages can be thereinbelow resumed, depending on the several fields:

### Agriculture

The increasing of the yield deriving from the cultivation of purple medic since from the latter it will be possible to make specific products of a comparatively high added value and without any cultivation and amount limitations which will favour a recovery on a large scale of such a cultivation with positive consequence also on the improvement of the agronomic status of the ground.

### Ecologic

The cultivation of the purple medic will provide in the ground ideal conditions preventing the disintegration of the ground and the washing away loss'of the nutritive substances thereof such as: mineral salts, humus substances, nitrogen, phosphorus, which represent elements susceptible to be discharged into rivers and then into the sea.

Thus, the cultivation of purple medic even in hilly regions would greatly contribute to a hydrologic stabilization of several areas or districts.

Another ecologic advantage is constituted by a drastic reduction of the fossil fuel consumes both for the cultivation operations and in the preserving, transforming and using steps of the end agricultural products.

Moreover, the distribution through the agricultural districts of industries used for transforming a comparatively high rate of the enormous mass of agricultural raw materials would allow to obtain a redistribution through the territory of the population and activities which at present affect the large urban agglomerations.

This advantageous event would provide positive modifications of different and very important consequences.

### Economical and social

The availability of vegetable products as well as the contemporaneous presence in the same regions or areas of paper mills would afford the possibility of using cellulose in a wet or moist condition thereby providing very great savings in the operation and installation of the paper mills.

The supposed increase of the agricultural yield exclusively deriving from an optimum use of the available agricultural resources as well as of the making cost reduction would undoubtly provide a very important improvement in the general economic conditions.

## Claims

1. A method for making industrial products from agricultural raw materials such as purple medic, corn, sorghum and other vegetable products or byproducts either containing or not starch, said method comprising the steps of pressing said vegetable products to provide a green juice and a fibrous residue and subjecting to subsequent and separated treatments said green juice and fibrous residue to provide: sera, vegetable products (containing soluble proteins, not protainaceous nitrogen, mineral salts, sugars), cellulose and other polysaccharides, process liquids, as well as proteinaceous-vitaminic concentrates and enzymes, **characterized in that**, after said pressing step, the fibrous residue is supplied to a dissolving device and then subjected to a second pressing step to provide a further green juice which is joined to the green juice of the first pressing step and a further fibrous residue.

2. A method according to Claim 1, **characterized in that** said further fibrous residue, obtained in said second pressing step, is supplied to a heated tank where it is mixed with water and an alkalinized product to provide a mixture having a pH from 8 to 14 at a temperature from 50°C to 120°C, from said mixture an alkalinized compound being obtained having a fibrous residue which can be separated from components different from cellulose.

3. A method according to Claim 2, **characterized in that** said alkalinized compound is subjected to a third pressing step for partially separating raw cellulose from components different from cellulose.

4. A method according to Claim 3, **characterized in that** said raw cellulose is subjected to a water washing step and a pressing step.

5. A method according to Claim 4, **characterized in that** said raw cellulose, after said water washing and pressing steps, is subjected to a drying step.

6. A method according to Claim 4, **characterized in that** the water used for washing said cellulose is subjected to a concentrating or depurating step.

7. A method according to Claim 4, **characterized in that** said components different from said cellulose, after said third pressing step, are subjected to a concentrating step.

8. A method according to Claim 1, **characterized in that** said green juice is subjected to a coagulating step.

9. A method according to Claim 8, **characterized in that** said coagulating step is an acid coagulating step in which to said green juice mineral or organic acids are added.

10. A method according to Claim 8, **characterized in that** said coagulating step is a thermal coagulating step in which said green juice is heated to a temperature from substantially 50°C to 90°C.

11. A method according to Claim 8, **characterized in that** said coagulating step is a fermentative coagulating step, in which into said green juice acidifying bacteria are inoculated.

12. A method according to Claim 8, **characterized in that** the product obtained by said coagulating step is subjected to a separating step performed in a press-filter or in a centrifugal separator for providing a solid phase and a liquid phase.

13. A method according to Claim 12, **characterized in that** said solid phase is subjected to a drying step.

14. A method according to Claim 12, **characterized in that** said liquid phase is subjected to a concentrating step.

15. A method according to Claim 12, **characterized in that** said liquid phase is subjected to a fermentating step.

16. A method according to Claim 1, **characterized in that** the corn cobs, together with the corn leaves, are subjected to a separate treatment comprising a separating step in which the leaves are separated from the cobs.

17. A method according to Claim 16, **characterized in that** said leaves are mixed with water and with an alkalinizing product to provide a mixture pH substantially from 8 to 14 at a temperature substantially from 50°C to 120°C, so as to provide an alkalinized liquid including cellulose and separable components different from cellulose.

18. A method according to Claim 17, **characterized in that** said alkalinizing liquid is subjected to a pressing step for providing raw cellulose and a sugar-protainaceous liquid.

19. A method according to Claim 17, **characterized in that** said raw cellulose obtained by said cob leaves is subjected to a further washing and pressing step.

20. A method according to Claim 19, **characterized in that** said raw cellulose, after said washing and pressing step, is subjected to a drying step.

21. A method according to Claim 19, **characterized in that** the liquids deriving from said further pressing step on said cob leaves are subjected to a concentrating step.

22. A method according to Claim 19, **characterized in that** said sugar-protainaceous liquid is subjected to a neutralizating step and brought to a pH from 4 to 7.

23. A method according to Claim 22, **characterized in that** said neutralizating step on said sugar-protainaceous liquid is performed by adding mineral or organic acids so as to achieve a protein precipitating isoelectric point.

24. A method according to Claim 23, **characterized in that** said neutralizating step of said sugar-protainaceous liquid is performed by inoculating bacteria to transform sugary and nitrogenous substances into organic acids.

25. A method according to Claim 24, **characterized in that** after said neutralizating step, said sugar-protainaceous liquid is subjected to a separating step in which it is separated into a solid fraction and a liquid fraction.

26. A method according to Claim 25, **characterized in that** said solid fraction is subjected to a drying step.

27. A method according to Claim 25, **characterized in that** said liquid fraction is subjected to a concentrating and drying step.

28. A method according to Claim 16, wherein said cobs, separated from said leaves, are subjected to a grinding step followed by a pressing step for separating a fibrous residue from a liquid compound, **characterized in that** said liquid compound, obtained by pressing said cobs, is subjected to a separating step thereby providing a starch material and a sugar liquid.

29. A method according to Claim 28, **characterized in that** said sugar liquid is subjected to a concentrating step.

30. A method according to Claim 1, **characterized in that** said method comprises a step of acidifying the grain materials and oil seeds by a biologic acidifying method, said acidifying method allowing a perfect preserving of said grain materials and products mixed therewith, without any growth of pathogenic bacteria, and the acidifying of the gastro-intestinal duct of the monogastric juices, with the following advantaged: an increase of the digesting properties of the proteins and of the starch and an elimination of the pathogenic microflora, since lactic bacteria are promoted so as to reduce the diarrheic phenomena in pigs and chicken.

31. A method according to Claim 1, **characterized in that** said method provides a full elimination of any problems of prior storing systems, such as losses of product by leaks, formation of mould, micotoxins, consume of power associated with periodic treatments.

## Patentansprüche

1. Verfahren zur Herstellung industrieller Produkte aus landwirtschaftlichen Rohmaterialien wie z.B. "Purple Medic", Mais, Sorghum und anderen pflanzlichen Produkten oder Nebenprodukten, die entweder Stärke enthalten oder nicht, wobei das Verfahren die Stufen des Pressens der pflanzlichen Produkte zur Bereitstellung von grünem Saft und einem faserigen Rückstand und die Durchführung nachfolgender und getrennter Behandlungen des grünen Saftes und des faserigen Rückstandes umfasst, um folgendes bereitzustellen: Serum, pflanzliche Produkte (die lösliche Proteine, nicht eiweißartiger Stickstoff, Mineralsalze, Zucker enthalten), Zellulose und andere Polysaccharide, Verarbeitungsflüssigkeiten sowie proteinartige-vitaminhaltige Konzentrate und Enzyme,
**dadurch gekennzeichnet, dass**
der faserige Rückstand nach der Pressstufe einer Auflösevorrichtung zugeführt wird und dann eine zweite Pressstufe zur Bereitstellung von weiterem grünem Saft, der zu dem grünen Saft der ersten Pressstufe zugegeben wird, und eines weiteren faserigen Rückstandes, durchläuft.

2. Verfahren nach Anspruch 1,
**dadurch gekennzeichnet, dass**
der in der zweiten Pressstufe erhaltene weitere faserige Rückstand einem beheizten Tank zugeführt wird, in dem er mit Wasser und einem alkalisierten Produkt gemischt wird, um eine Mischung mit einem pH-Wert von 8 bis 14 bei einer Temperatur von 50 °C bis 120 °C bereitzustellen, wobei von der Mischung eine alkalisierte Zusammensetzung mit einem faserigen Rückstand erhalten wird, der von den sich von Zellulose unterscheidenden Komponenten abgeschieden werden kann.

3. Verfahren nach Anspruch 2,
**dadurch gekennzeichnet, dass**
die alkalisierte Zusammensetzung eine dritte Pressstufe zur teilweisen Abscheidung von Rohzellulose von sich von Zellulose unterscheidenden Komponenten durchläuft.

4. Verfahren nach Anspruch 3,
**dadurch gekennzeichnet, dass**
die Rohzellulose eine Wasserwaschstufe und eine Pressstufe durchläuft.

5. Verfahren nach Anspruch 4,
**dadurch gekennzeichnet, dass**
die Rohzellulose nach den Wasserwasch- und Pressstufen eine Trocknungsstufe durchläuft.

6. Verfahren nach Anspruch 4,
**dadurch gekennzeichnet, dass**
das zum Waschen der Zellulose verwendete Wasser eine Konzentrations- oder Reinigungsstufe durchläuft.

7. Verfahren nach Anspruch 4,
**dadurch gekennzeichnet, dass**
die sich von Zellulose unterscheidenden Komponenten nach der dritten Pressstufe eine Konzentrationsstufe durchlaufen.

8. Verfahren nach Anspruch 1,
**dadurch gekennzeichnet, dass**
der grüne Saft eine Gerinnungsstufe durchläuft.

9. Verfahren nach Anspruch 8,
**dadurch gekennzeichnet, dass**
die Gerinnungsstufe eine saure Gerinnungsstufe ist, in der dem grünen Saft mineralische oder organische Säuren zugegeben werden.

10. Verfahren nach Anspruch 8,
**dadurch gekennzeichnet, dass**
die Gerinnungsstufe eine thermische Gerinnungsstufe ist, in der der grüne Saft von einer Temperatur von im wesentlichen 50 °C auf 90 °C erwärmt wird.

11. Verfahren nach Anspruch 8,
**dadurch gekennzeichnet, dass**
die Gerinnungsstufe eine fermentative Gerinnungsstufe ist, in der der grüne Saft mit säurebildenden Bakterien beimpft wird.

12. Verfahren nach Anspruch 8,
**dadurch gekennzeichnet, dass**
das durch die Gerinnungsstufe erhaltene Produkt zur Bereitstellung einer Festphase und einer Flüssigphase eine in einem Druckfilter oder in einem Fliehkraftabscheider ausgeführte Abscheidestufe durchläuft.

13. Verfahren nach Anspruch 12,
**dadurch gekennzeichnet, dass**
die Festphase eine Trocknungsstufe durchläuft.

14. Verfahren nach Anspruch 12,
**dadurch gekennzeichnet, dass**
die Flüssigphase eine Konzentrationsstufe durchläuft.

15. Verfahren nach Anspruch 12,
**dadurch gekennzeichnet, dass**
die Flüssigphase eine Fermentierungsstufe durchläuft.

16. Verfahren nach Anspruch 1,
**dadurch gekennzeichnet, dass**
die Maiskolben zusammen mit den Maisblättern eine separate Behandlung mit einer Abscheidestufe durchlaufen, in der die Blätter von den Kolben getrennt werden.

17. Verfahren nach Anspruch 16,
**dadurch gekennzeichnet, dass**
die Blätter mit Wasser und mit einem alkalisierten Produkt gemischt werden, um eine Mischung mit einem pH-Wert im wesentlichen von 8 bis 14 bei einer Temperatur im wesentlichen von 50 °C bis 120 °C bereitzustellen, um eine alkalisierte Flüssigkeit mit Zellulose und abscheidbaren, sich von Zellulose unterscheidenden Komponenten bereitzustellen.

18. Verfahren nach Anspruch 17,
**dadurch gekennzeichnet, dass**
die alkalisierte Flüssigkeit zur Bereitstellung von Rohzellulose und einer zucker-proteinartigen Flüssigkeit eine Pressstufe durchläuft.

19. Verfahren nach Anspruch 17,
**dadurch gekennzeichnet, dass**
die aus den Maisblättern erhaltene Rohzellulose eine weitere Wasch- und Pressstufe durchläuft.

20. Verfahren nach Anspruch 19,
**dadurch gekennzeichnet, dass**
die Rohzellulose nach der Wasch- und Pressstufe eine Trocknungsstufe durchläuft.

21. Verfahren nach Anspruch 19,
**dadurch gekennzeichnet, dass**
die aus der weiteren Pressstufe für die Maisblätter stammenden Flüssigkeiten eine weitere Konzentrationsstufe durchlaufen.

22. Verfahren nach Anspruch 19,
**dadurch gekennzeichnet, dass**
die zucker-proteinartige Flüssigkeit eine Neutralisationsstufe durchläuft und auf einen pH-Wert von 4 bis 7 gebracht wird.

23. Verfahren nach Anspruch 22,
**dadurch gekennzeichnet, dass**
die Neutralisationsstufe für die zucker-proteinartige Flüssigkeit durch Zugabe von mineralischen oder organischen Säuren ausgeführt wird, um einen proteinausfällenden isoelektrischen Punkt zu erhalten.

24. Verfahren nach Anspruch 23,
**dadurch gekennzeichnet, dass**
die Neutralisationsstufe der zucker-proteinartigen Flüssigkeit durch Beimpfen mit Bakterien ausgeführt wird, um zucker- und stickstoffhaltige Substanzen in organische Säuren umzuwandeln.

25. Verfahren nach Anspruch 24,
**dadurch gekennzeichnet, dass**
die zucker-proteinartige Flüssigkeit nach der Neutralisationsstufe eine Abscheidestufe durchläuft, in der sie in eine Festfraktion und eine Flüssigfraktion getrennt wird.

26. Verfahren nach Anspruch 25,
**dadurch gekennzeichnet, dass**
die Festfraktion eine Trocknungsstufe durchläuft.

27. Verfahren nach Anspruch 25,
**dadurch gekennzeichnet, dass**
die Flüssigfraktion eine Konzentrations- und Trocknungsstufe durchläuft.

28. Verfahren nach Anspruch 16,
**dadurch gekennzeichnet, dass**
die von den Blättern getrennten Maiskolben eine Mahlstufe durchlaufen, auf die eine Pressstufe zum Abscheiden eines faserigen Rückstandes von einer flüssigen Zusammensetzung folgt,
**dadurch gekennzeichnet, dass**
die durch Pressen der Maiskolben erhaltene flüssige Zusammensetzung eine Abscheidestufe durchläuft und dadurch ein Stärkematerial und eine zuckrige Flüssigkeit bereitgestellt wird.

29. Verfahren nach Anspruch 28,
**dadurch gekennzeichnet, dass**
die zuckrige Flüssigkeit eine Konzentrationsstufe durchläuft.

30. Verfahren nach Anspruch 1,
**dadurch gekennzeichnet, dass**
das Verfahren eine Stufe der Säuerung der Getreidematerialien und Ölsaaten durch ein biologisches Säuerungsverfahren umfasst, wodurch eine vollständige Erhaltung der damit gemischten Getreidematerialien und -produkte ohne jedes Wachstum krankheitserregender Bakterien, und die Säuerung des Magen-Darm-Traktes mit den Magensäften mit den folgenden Vorteilen ermöglicht wird: Steigerung der Verdauungsfähigkeiten von Proteinen und von Stärke und Beseitigung der krankheitserregenden Mikroflora, da Milchsäurebakterien dahingehend gefördert werden, dass sie Durchfallvorkommnisse bei Schweinen und Hühnern verringern.

31. Verfahren nach Anspruch 1,
**dadurch gekennzeichnet, dass**
das Verfahren eine vollständige Beseitigung aller Probleme von Lagerungssystemen nach dem Stand der Technik bietet, wie z.B. Produktverluste durch Lecks, Bildung von Schimmel, Mikrotoxinen, Stromverbrauch durch regelmäßige Behandlungen.

## Revendications

1. Procédé pour la fabrication de produits industriels à partir de matières premières agricoles comme de la luzerne, du maïs, du sorgho et autres produits végétaux ou sous-produits contenant ou non de l'amidon, ledit procédé comprenant les étapes de pressage desdits produits végétaux pour produire un jus vert et un résidu fibreux et la soumission à des traitements ultérieurs et séparés dudit jus vert et du résidu fibreux pour fournir : des sérums, des produits végétaux (contenant des protéines solubles, de l'azote protéique, des sels minéraux, des sucres), de la cellulose et d'autres polysaccharides, des liquides de traitement, ainsi que des concentrés et des enzymes protéiques-vitaminiques, **caractérisé en ce que**, après ladite étape de pressage, le résidu fibreux est alimenté à un dispositif de dissolution et ensuite soumis à une seconde étape de pressage pour fournir un autre jus vert qui est ajouté au jus vert de la première étape de pressage et un autre résidu fibreux.

2. Procédé selon la revendication 1, **caractérisé en ce que** ledit autre résidu fibreux, obtenu lors de ladite seconde étape de pressage, est alimenté à une cuve chauffée où il est mélangé à l'eau et un produit alcalinisé pour constituer un mélange ayant un pH de 8 à 14 à une température de 50°C à 120°C, à partir dudit mélange, un composé alcalinisé étant obtenu ayant un résidu fibreux qui peut être séparé des composants différents de la cellulose.

3. Procédé selon la revendication 2, **caractérisé en ce que** ledit composé alcalinisé est soumis à une troisième étape de pressage pour séparer partiellement la cellulose brute des composants différents de la cellulose.

4. Procédé selon la revendication 3, **caractérisé en ce que** ladite cellulose brute est soumise à une étape de lavage à l'eau et une étape de pressage.

5. Procédé selon la revendication 4, **caractérisé en ce que** ladite cellulose brute, après lesdites étapes de lavage à l'eau et pressage, est soumise à une étape de séchage.

6. Procédé selon la revendication 4, **caractérisé en ce que** l'eau utilisée pour laver ladite cellulose est soumise à une étape de concentration ou épuration.

7. Procédé selon la revendication 4, **caractérisé en ce que** lesdits composants différents de ladite cellulose, après ladite troisième étape de pressage, sont soumis à une étape de concentration.

8. Procédé selon la revendication 1, **caractérisé en ce que** ledit jus vert est soumis à une étape de coagulation.

9. Procédé selon la revendication 8, **caractérisé en ce que** ladite étape de coagulation est une étape de coagulation acide où les acides minéraux ou organiques dudit jus vert sont ajoutés.

10. Procédé selon la revendication 8, **caractérisé en ce que** ladite étape de coagulation est une étape de coagulation thermique où ledit jus vert est chauffé à une température de pratiquement 50°C à 90°C.

11. Procédé selon la revendication 8, **caractérisé en ce que** ladite étape de coagulation est une étape de coagulation fermentaire où les bactéries acidifiantes dudit jus vert sont inoculées.

12. Procédé selon la revendication 8, **caractérisé en ce que** le produit obtenu par ladite étape de coagulation est soumis à une étape de séparation réalisée dans un filtre-presse ou dans un séparateur centrifuge pour assurer une phase solide et une phase liquide.

13. Procédé selon la revendication 12, **caractérisé en ce que** ladite phase solide est soumise à une étape de séchage.

14. Procédé selon la revendication 12, **caractérisé en ce que** ladite phase liquide est soumise à une étape de concentration.

15. Procédé selon la revendication 12, **caractérisé en ce que** ladite phase liquide est soumise à une étape de fermentation.

16. Procédé selon la revendication 1, **caractérisé en ce que** les rafles de maïs, ainsi que les feuilles de maïs, sont soumises à un traitement séparé comprenant une étape de séparation où les feuilles sont séparées des rafles.

17. Procédé selon la revendication 16, **caractérisé en ce que** lesdites feuilles sont mélangées à l'eau et à un produit alcalinisant pour assurer un pH du mélange sensiblement de 8 à 14 à une température sensiblement de 50°C à 120°C, de façon à fournir un liquide alcalinisé comprenant de la cellulose et des composants séparables différents de la cellulose.

18. Procédé selon la revendication 17, **caractérisé en ce que** ledit liquide alcalinisant est soumis à une étape de pressage pour fournir de la cellulose brute et un liquide protéique au sucre.

19. Procédé selon la revendication 17, **caractérisé en ce que** ladite cellulose brute obtenue par lesdites feuilles de maïs est soumise à une autre étape de lavage et de pressage.

20. Procédé selon la revendication 19, **caractérisé en ce que** ladite cellulose brute, après ladite étape de lavage et pressage, est soumise à une étape de séchage.

21. Procédé selon la revendication 19, **caractérisé en ce que** les liquides dérivés de ladite autre étape de pressage sur lesdites feuilles de rafles sont soumis à une étape de concentration.

22. Procédé selon la revendication 19, **caractérisé en ce que** ledit liquide protéique au sucre est soumis à une étape de neutralisation et porté à un pH de 4 à 7.

23. Procédé selon la revendication 22, **caractérisé en ce que** ladite étape de neutralisation sur ledit liquide protéique au sucre est réalisée en ajoutant des acides minéraux ou organiques de façon à obtenir un point isoélectrique de précipitation des protéines.

24. Procédé selon la revendication 23, **caractérisé en ce que** ladite étape de neutralisation dudit liquide protéique au sucre est réalisée en inoculant des bactéries pour transformer les substances sucrées et azotées en acides organiques.

25. Procédé selon la revendication 24, **caractérisé en ce que**, après ladite étape de neutralisation, ledit liquide protéique au sucre est soumis à une étape de séparation où il est séparé en une fraction solide et une fraction liquide.

26. Procédé selon la revendication 25, **caractérisé en ce que** ladite fraction solide est soumise à une étape de séchage.

27. Procédé selon la revendication 25, **caractérisé en ce que** ladite fraction liquide est soumise à une étape de concentration et de séchage.

28. Procédé selon la revendication 16, **caractérisé en ce que** lesdites rafles, séparées desdites feuilles, sont soumises à une étape de broyage suivie d'une étape de pressage pour séparer un résidu fibreux d'un composé liquide, **caractérisé en ce que** ledit composé liquide, obtenu par pressage desdites rafles, est soumis à une étape de séparation constituant ainsi une matière à l'amidon et un liquide au sucre.

29. Procédé selon la revendication 28, **caractérisé en ce que** ledit liquide au sucre est soumis à une étape de concentration.

30. Procédé selon la revendication 1, **caractérisé en ce que** ledit procédé comprend une étape d'acidification des matières en grains et des graines d'huile par un procédé d'acidification biologique, ledit procédé acidifiant permettant une parfaite conservation desdites matières et produits en grains mélangés, sans développement de bactéries pathogènes, et l'acidification des voies gastro-intestinales des sucs gastriques, avec les avantages suivants : augmentation des propriétés digestives des protéines et de l'amidon et une élimination de la microflore pathogène, puisque les bactéries lactiques sont stimulées afin de réduire les phénomènes de diarrhée chez les porcs et les poulets.

31. Procédé selon la revendication 1, **caractérisé en ce que** ledit procédé assure une élimination complète des problèmes des systèmes avant stockage, tels que pertes de produit par fuites, formation de moisissure, mycotoxines, consommation d'énergie associée à des traitements périodiques.
